# EUROPEAN PATENT APPLICATION

(11) **EP 4 773 006 A1**
(43) Date of publication of application: **08.07.2026**
(21) Application number: 25227913.8
(22) Date of filing: 31.12.2025
(51) Int. Cl.: G06F 9/50, H04L 9/40, G06F 21/40, G06F 21/62

(54) **ROLE-BASED APPROVAL OF A RESOURCE LIFECYCLE EVENT WITH REGARD TO A CLOUD-BASED RESOURCE**

(30) Priority: 06.01.2025 IN 202511001051; 10.02.2025 US 202519049864
(71) Applicant: Microsoft Technology Licensing, LLC, Redmond, WA 98052-6399 (US)
(72) Inventor: SHARMA, Arjun, Redmond, 98052-6399 (US); VERMA, Vaibhav, Redmond, 98052-6399 (US); GARG, Hardik, Redmond, 98052-6399 (US); LALWANI, Sheetal, Redmond, 98052-6399 (US); SINWAR, Mukesh Kumar, Redmond, 98052-6399 (US); KAPOOR, Drishti, Redmond, 98052-6399 (US); TANDON, Shubh, Redmond, 98052-6399 (US); KUMAR, Abhishek, Redmond, 98052-6399 (US)
(74) Representative: Murgitroyd & Company

(57) **Abstract**

Techniques are described herein that are capable of performing role-based approval of a resource lifecycle event with regard to a cloud-based resource. A request to perform a resource lifecycle event with regard to a cloud-based resource is received. A designated approver is identified. The designated approver has authority to grant approval to perform the resource lifecycle event with regard to the cloud-based resource as a result of the designated approver having an approver role, which is authorized to grant the approval. An explicit approval is obtained from the designated approver. The explicit approval grants approval to perform the resource lifecycle event with regard to the cloud-based resource. As a result of an approval criterion being satisfied, performance of the resource lifecycle event with regard to the cloud-based resource is triggered. The approval criterion includes obtainment of the explicit approval.

## Description

### CROSS-REFERENCE TO RELATED APPLICATION(S)

This application claims priority to Indian Patent Application No. 202511001051 (Atty Docket No. 503863-IN01), filed January 6, 2025 and entitled "Role-Based Approval of a Resource Lifecycle Event with Regard to a Cloud-Based Resource," the entirety of which is incorporated herein by reference.

### BACKGROUND

Resource lifecycle management is management of a lifecycle of a resource. The lifecycle of the resource includes stages through which the resource goes from its initial creation and deployment to its eventual retirement and disposal. Example stages in the lifecycle of the resource include but are not limited to provisioning, deployment, monitoring, maintenance, scaling, and decommissioning. Provisioning of the resource includes allocating the resource based on a current need and ensuring availability of the resource for use. Deployment of the resource includes making the resource available to user(s) and/or system(s). Monitoring the resource includes tracking (e.g., continuously tracking) use and performance of the resource. Maintenance of the resource includes maintaining (e.g., updating, patching, or optimizing) the resource, for example, to prevent issues and to extend the lifespan of the resource. Scaling the resource includes adjusting allocation of the resource dynamically to meet changing demands. Decommissioning the resource includes retiring the resource, for example, when the resource is no longer needed.

Access to a resource over its lifecycle traditionally is managed, controlled, and monitored using privileged identity management (PIM). PIM provides users temporary, time-bound (e.g., just-in-time) access to resources based on the users having authority to do so. However, PIM has its limitations. For example, implementing and managing PIM is relatively complex and typically consumes a substantial amount of time and resources. In another example, scaling PIM solutions to accommodate more users and resources may be challenging. In yet another example, implementing a comprehensive PIM solution may be relatively expensive. In still another example, PIM may not provide sufficient security with regard to operations that are performed by a user with regard to a resource.

### SUMMARY

It may be desirable to use an approver role to identify a designated approver that has authority to grant approval to perform a resource lifecycle event with regard to a cloud-based resource. In an example, the approver role is authorized to grant the approval to perform the resource lifecycle event with regard to the cloud-based resource, and the designated approver obtains the authority as a result of being assigned the approver role. In another example, approval from the designated approver is established as a prerequisite to performing the resource lifecycle event with regard to the cloud-based resource.

A cloud-based resource is a resource that is hosted in the cloud. The cloud is a network of servers. In many instances, the cloud is a global network of remote servers that operate as a single ecosystem. Examples of a cloud-based resource include but are not limited to a community, a virtual network (a.k.a. an enclave), a connection, an endpoint, and a policy exemption. A cloud-based resource may be a resource group, which includes multiple cloud-based resources of an identified (e.g., particular) type. In an example, the resource group includes multiple communities, multiple virtual networks, multiple connections, multiple endpoints, or multiple policy exemptions.

A community is a plurality of virtual networks. In an example, one or more of the virtual networks in the community are isolated from one or more other virtual networks in the community. For instance, each of the virtual networks in the community may be isolated from each of the other virtual networks in the community. By isolating a virtual network in a community from other network(s) in the community, the virtual network provides a secure environment for storing information (e.g., data and code) and for executing code. In an aspect, entities that are external to the virtual network are unable to access information in the virtual network unless specified security requirements are satisfied. In an example, data stored in the virtual network includes (e.g., is) a secret. Examples of a secret include but are not limited to a certificate, a configuration setting, a token, a cryptographic key, and a credential. Examples of a cryptographic key include but are not limited to an application programming interface (API) key, a secure shell (SSH) key, an encryption key, and a decryption key. A cryptographic key may be an asymmetric key (e.g., a private key or a public key) or a symmetric key. Examples of a credential include but are not limited to a username, a password, and a personal identification number (PIN).

A virtual network is a network that is defined by multiple virtual nodes (a.k.a. endpoints) and connections between subsets of the virtual nodes. Each virtual node is software rather than physical hardware. For instance, the software may be used to represent the physical hardware. In an aspect, the virtual network allows multiple devices to communicate as if the devices are in the same physical network, even if the devices are geographically dispersed.

A connection is a path via which information is transferred from a first endpoint in a virtual network to a second endpoint, which is in the virtual network or in a different virtual network. In an example, the connection enables communication between the first endpoint and the second endpoint.

An endpoint is a node in a virtual network. Examples of an endpoint include but are not limited to a firewall, a virtual machine (VM), a database (DB), a web service (e.g., a backend service), a structured query language (SQL) server, a storage account, and a blob storage.

A policy exemption is an exemption from a policy, wherein the policy prohibits a user from initiating (e.g., performing) an action. In an example, the action is a resource lifecycle event with regard to a resource. A request to exempt the user from the policy may be initiated by the user or by another entity on behalf of the user. Exempting the user from the policy enables the user to initiate the action, so long as no other prerequisites for the user to perform the action are unsatisfied.

A resource lifecycle event with regard to a resource is defined to be creation of the resource, modification of the resource, and/or deletion of the resource. Creation of the resource includes creating information (e.g., code) that defines the resource and causing the resource to be in an operational state. An operational state of a resource is a state in which the resource is capable of performing an intended task (e.g., capable of functioning). An intended task of a resource is a task that the resource is configured to perform. A non-operational state of a resource is a state in which the resource is not capable of performing an intended task (e.g., not capable of functioning). For example, if the resource has not been configured to perform any task, the resource is deemed to be in the non-operational state. In accordance with this example, creating a non-functional placeholder that represents the resource does not constitute creation of the resource; however, creating the non-functional placeholder and filling the non-functional placeholder with content that includes functionality, which enables the resource to perform the intended task, constitutes creation of the resource. Modification of the resource includes changing an attribute of the resource. Examples of an attribute of a resource include but are not limited to a configuration of the resource (e.g., a security configuration), a policy associated with the resource (e.g., a firewall policy), and a rule associated with the resource (e.g., a network rule). Deletion of the resource includes deleting information (e.g., code) that defines the resource.

Various approaches are described herein for, among other things, performing role-based approval of a resource lifecycle event with regard to a cloud-based resource. In an example approach, a request to perform a resource lifecycle event with regard to a cloud-based resource is received. A designated approver is identified. The designated approver has authority to grant approval to perform the resource lifecycle event with regard to the cloud-based resource as a result of the designated approver having an approver role, which is authorized to grant the approval to perform the resource lifecycle event with regard to the cloud-based resource. An explicit approval is obtained from the designated approver. The explicit approval grants approval to perform the resource lifecycle event with regard to the cloud-based resource. As a result of an approval criterion being satisfied, performance of the resource lifecycle event with regard to the cloud-based resource is triggered. The approval criterion includes (e.g., requires) obtainment of the explicit approval.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a block diagram of an example resource lifecycle event approval system in accordance with an embodiment.
FIG. 2 is an example activity diagram for performing role-based approval of a resource lifecycle event with regard to a cloud-based resource in accordance with an embodiment.
FIGS. 3 and 5 depict flowcharts of example methods for performing role-based approval of a resource lifecycle event with regard to a cloud-based resource in accordance with embodiments.
FIG. 4 is a block diagram of an example computing system in accordance with an embodiment.
FIG. 6 is a block diagram of an example implementation of approval obtaining logic shown in FIG. 4 in accordance with an embodiment.
FIG. 7 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Example Embodiments

It may be desirable to use an approver role to identify a designated approver that has authority to grant approval to perform a resource lifecycle event with regard to a cloud-based resource. In an example, the approver role is authorized to grant the approval to perform the resource lifecycle event with regard to the cloud-based resource, and the designated approver obtains the authority as a result of being assigned the approver role. In another example, approval from the designated approver is established as a prerequisite to performing the resource lifecycle event with regard to the cloud-based resource.

A cloud-based resource is a resource that is hosted in the cloud. The cloud is a network of servers. In many instances, the cloud is a global network of remote servers that operate as a single ecosystem. Examples of a cloud-based resource include but are not limited to a community, a virtual network (a.k.a. an enclave), a connection, an endpoint, and a policy exemption. A cloud-based resource may be a resource group, which includes multiple cloud-based resources of an identified (e.g., particular) type. In an example, the resource group includes multiple communities, multiple virtual networks, multiple connections, multiple endpoints, or multiple policy exemptions.

A community is a plurality of virtual networks. In an example, one or more of the virtual networks in the community are isolated from one or more other virtual networks in the community. For instance, each of the virtual networks in the community may be isolated from each of the other virtual networks in the community. By isolating a virtual network in a community from other network(s) in the community, the virtual network provides a secure environment for storing information (e.g., data and code) and for executing code. In an aspect, entities that are external to the virtual network are unable to access information in the virtual network unless specified security requirements are satisfied. In an example, data stored in the virtual network includes (e.g., is) a secret. Examples of a secret include but are not limited to a certificate, a configuration setting, a token, a cryptographic key, and a credential. Examples of a cryptographic key include but are not limited to an application programming interface (API) key, a secure shell (SSH) key, an encryption key, and a decryption key. A cryptographic key may be an asymmetric key (e.g., a private key or a public key) or a symmetric key. Examples of a credential include but are not limited to a username, a password, and a personal identification number (PIN).

A virtual network is a network that is defined by multiple virtual nodes (a.k.a. endpoints) and connections between subsets of the virtual nodes. Each virtual node is software rather than physical hardware. For instance, the software may be used to represent the physical hardware. In an aspect, the virtual network allows multiple devices to communicate as if the devices are in the same physical network, even if the devices are geographically dispersed.

A connection is a path via which information is transferred from a first endpoint in a virtual network to a second endpoint, which is in the virtual network or in a different virtual network. In an example, the connection enables communication between the first endpoint and the second endpoint.

An endpoint is a node in a virtual network. Examples of an endpoint include but are not limited to a firewall, a virtual machine (VM), a database (DB), a web service (e.g., a backend service), a structured query language (SQL) server, a storage account, and a blob storage.

A policy exemption is an exemption from a policy, wherein the policy prohibits a user from initiating (e.g., performing) an action. In an example, the action is a resource lifecycle event with regard to a resource. A request to exempt the user from the policy may be initiated by the user or by another entity on behalf of the user. Exempting the user from the policy enables the user to initiate the action, so long as no other prerequisites for the user to perform the action are unsatisfied.

A resource lifecycle event with regard to a resource is defined to be creation of the resource, modification of the resource, and/or deletion of the resource. Creation of the resource includes creating information (e.g., code) that defines the resource and causing the resource to be in an operational state. An operational state of a resource is a state in which the resource is capable of performing an intended task (e.g., capable of functioning). An intended task of a resource is a task that the resource is configured to perform. A non-operational state of a resource is a state in which the resource is not capable of performing an intended task (e.g., not capable of functioning). For example, if the resource has not been configured to perform any task, the resource is deemed to be in the non-operational state. In accordance with this example, creating a non-functional placeholder that represents the resource does not constitute creation of the resource; however, creating the non-functional placeholder and filling the non-functional placeholder with content that includes functionality, which enables the resource to perform the intended task, constitutes creation of the resource. Modification of the resource includes changing an attribute of the resource. Examples of an attribute of a resource include but are not limited to a configuration of the resource (e.g., a security configuration), a policy associated with the resource (e.g., a firewall policy), and a rule associated with the resource (e.g., a network rule). Deletion of the resource includes deleting information (e.g., code) that defines the resource.

Example embodiments described herein are capable of performing role-based approval of a resource lifecycle event with regard to a cloud-based resource. In an example approach, a request to perform a resource lifecycle event with regard to a cloud-based resource is received. A designated approver is identified. The designated approver has authority to grant approval to perform the resource lifecycle event with regard to the cloud-based resource as a result of the designated approver having an approver role, which is authorized to grant the approval to perform the resource lifecycle event with regard to the cloud-based resource. An explicit approval is obtained from the designated approver. The explicit approval grants approval to perform the resource lifecycle event with regard to the cloud-based resource. As a result of an approval criterion being satisfied, performance of the resource lifecycle event with regard to the cloud-based resource is triggered. The approval criterion includes (e.g., requires) obtainment of the explicit approval.

Example techniques described herein have a variety of benefits as compared to conventional techniques for performing access control. Access control is a process of controlling access of users to resources (e.g., cloud-based resources). In an example, users who have a requisite permission are granted access to a resource, whereas users who do not have the requisite permission are denied access to the resource. Role-based access control (RBAC) is access control in which a mapping between users and roles is used to define permissions regarding access to resources. For instance, access to the resources may be controlled by assigning the users (e.g., groups of the users) to roles for particular resources. The example techniques are capable of expanding traditional RBAC techniques to define an approver role, which is authorized to grant approval to perform a resource lifecycle event with regard to a cloud-based resource. By assigning the approver role to a designated approver, the designated approver is given authority to grant approval to perform the resource lifecycle event with regard to the cloud-based resource.

In an implementation, the example techniques increase security of the cloud-based resource, as compared to conventional access control techniques. In an example, identifying the designated approver as a result of the designated approver having the approver role, which is authorized to grant the approval to perform the resource lifecycle event with regard to the cloud-based resource, and/or obtaining an explicit approval from the designated approver that grants the approval to perform the resource lifecycle event with regard to the cloud-based resource increases the security of the cloud-based resource. For instance, the example techniques may increase the security of the cloud-based resource by mandating explicit approval from the designated approver prior to performance of the resource lifecycle event with regard to the cloud-based resource. The example techniques are capable of increasing data isolation by preventing unauthorized actions while adhering to zero-trust principles. Zero-trust principles are principles that assume that no implicit trust is granted to any user, device, or system in a networked environment, regardless whether they are inside or outside a network perimeter. Zero-trust principles require each request to access a resource that is received from a requestor to be authenticated, authorized, and validated (e.g., continually validated) before access to the resource is granted to the requestor.

In an example of this implementation, the example techniques increase the security of the cloud-based resource by ensuring that performance of the resource lifecycle event with regard to the cloud-based resource is conditioned on (e.g., predicated on, dependent on, or contingent upon) the designated approver granting the approval to do so. In an example, the performance of the resource lifecycle event cannot occur without the designated approver granting the approval to do so (and/or the approval being received from the designated approver) beforehand. By requiring a designated approver having the approver role to approve performance of a resource lifecycle event with regard to a cloud-based resource prior to performance of the resource lifecycle event with regard to the cloud-based resource, the example techniques may be more scalable (e.g., more capable of accommodating an increasing number of users) and/or less costly than conventional access control techniques.

In another example of this implementation, the example techniques increase the security of the cloud-based resource by determining whether performance of the resource lifecycle event with regard to the cloud-based resource complies with (e.g., satisfies) a security policy (e.g., an RBAC policy) associated with the cloud-based resource more accurately, precisely, and/or reliably than the conventional access control techniques. The security policy may be resource-specific. Accordingly, the cloud-based resource may be the only resource to which the security policy applies.

In another implementation, the example techniques reduce an amount of time and/or resources (e.g., processor cycles, memory, network bandwidth) that is consumed to determine whether performance of a resource lifecycle event with regard to a cloud-based resource compromises (or is likely to compromise) security of the cloud-based resource, a system that includes or utilizes the cloud-based resource, or a system that is impacted by the performance of the resource lifecycle event. In an example, by identifying a designated approver that has authority to grant approval to perform the resource lifecycle event with regard to the cloud-based resource as a result of the designated approver having an approver role, which is authorized to grant the approval to perform the resource lifecycle event with regard to the cloud-based resource, and/or by obtaining an explicit approval from the designated approver that grants the approval to perform the resource lifecycle event with regard to the cloud-based resource, the example techniques reduce the amount of time and/or resources that is consumed to determine whether the performance of the resource lifecycle event with regard to the cloud-based resource compromises (or is likely to compromise) the security. By reducing the amount of time and/or resources that is consumed by a computing system to determine whether the performance of the resource lifecycle event with regard to the cloud-based resource compromises (or is likely to compromise) the aforementioned security, the efficiency of the computing system may be increased.

By reducing the amount of time that is consumed to determine whether the performance of the resource lifecycle event with regard to the cloud-based resource compromises (or is likely to compromise) the aforementioned security, the example techniques may increase a user experience and/or efficiency of an end user who uses the cloud-based resource and/or a security professional who manages security of the cloud-based resource, a system that includes or utilizes the cloud-based resource, or a system that is impacted by the performance of the resource lifecycle event. In an aspect, the example techniques reduce a number of tasks that are manually performed by the end user and/or the security professional by automating a determination whether the performance of the resource lifecycle event with regard to the cloud-based resource compromises (or is likely to compromise) the aforementioned security. In an example, reducing the number of tasks that are manually performed by the security professional enables the security professional to focus on other tasks, which may increase the security of other cloud-based resources, a system that includes or utilizes the cloud-based resource, or a system that is impacted by the performance of the resource lifecycle event. The user experience and/or efficiency of the security professional and/or the end user may be increased in other ways, as well. For example, the user experience and/or the efficiency may be increased by increasing the security of the cloud-based resource. In another example, the user experience and/or the efficiency may be increased through a more accurate, precise, reliable, timely, and/or efficient determination whether the performance of the resource lifecycle event with regard to the cloud-based resource compromises (or is likely to compromise) the aforementioned security.

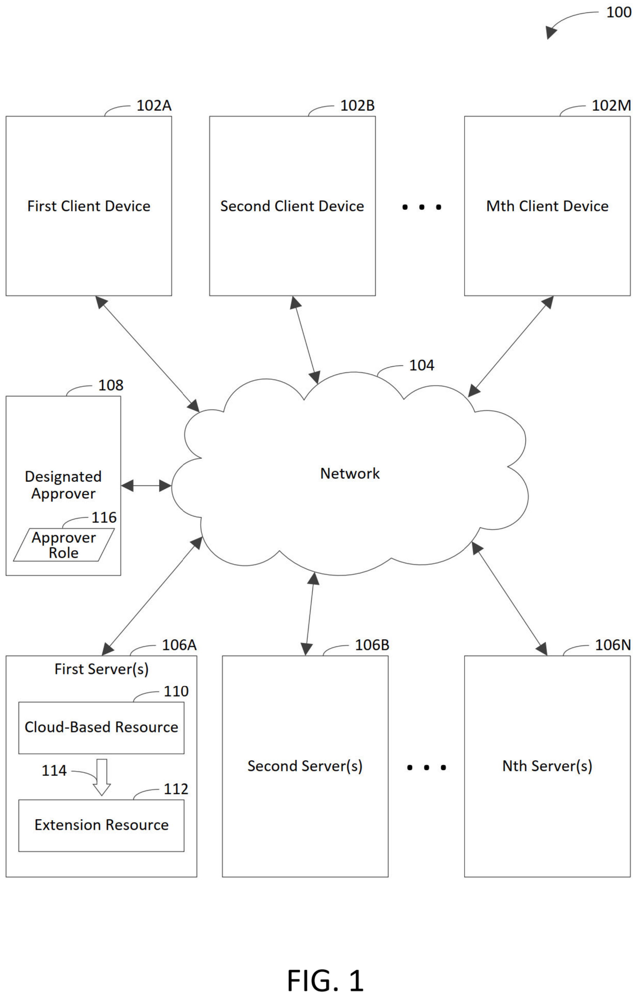

FIG. 1 is a block diagram of an example resource lifecycle event approval system 100 in accordance with an embodiment. Generally speaking, the resource lifecycle event approval system 100 operates to provide information to users in response to requests (e.g., hypertext transfer protocol (HTTP) requests) that are received from the users. The information may include documents (Web pages, images, audio files, video files, etc.), output of executables, and/or any other suitable type of information. In accordance with example embodiments described herein, the resource lifecycle event approval system 100 performs role-based approval of a resource lifecycle event with regard to a cloud-based resource 110. Detail regarding techniques for performing role-based approval of a resource lifecycle event with regard to a cloud-based resource is provided in the following discussion.

As shown in FIG. 1, the resource lifecycle event approval system 100 includes a plurality of client devices 102A-102M (e.g., user devices), a network 104, a plurality of servers 106A-106N, and a designated approver. Communication among the client devices 102A-102M, the servers 106A-106N, and the designated approver 108 is carried out over the network 104 using well-known network communication protocols. The network 104 may be a wide-area network (e.g., the Internet), a local area network (LAN), another type of network, or a combination thereof.

The client devices 102A-102M are computing systems that are capable of communicating with servers 106A-106N. A computing system is a system that includes at least a portion of a processor system such that the portion of the processor system includes at least one processor that is capable of manipulating data in accordance with a set of instructions. A processor system includes one or more processors, which may be on a same (e.g., single) device or distributed among multiple (e.g., separate) devices. For instance, a computing system may be a computer, a personal digital assistant, etc. The client devices 102A-102M are configured to provide requests to the servers 106A-106N for requesting information stored on (or otherwise accessible via) the servers 106A-106N. For instance, a user may initiate a request for executing a computer program (e.g., an application) using a client (e.g., a Web browser, Web crawler, or other type of client) deployed on a client device 102 that is owned by or otherwise accessible to the user. In accordance with some example embodiments, the client devices 102A-102M are capable of accessing domains (e.g., Web sites) hosted by the servers 104A-104N, so that the client devices 102A-102M may access information that is available via the domains. Such domain may include Web pages, which may be provided as hypertext markup language (HTML) documents and objects (e.g., files) that are linked therein, for example.

Each of the client devices 102A-102M may include any client-enabled system or device, including but not limited to a desktop computer, a laptop computer, a tablet computer, a wearable computer such as a smart watch or a head-mounted computer, a personal digital assistant, a cellular telephone, an Internet of things (IoT) device, or the like. It will be recognized that any one or more of the client devices 102A-102M may communicate with any one or more of the servers 106A-106N.

The servers 106A-106N are computing systems that are capable of communicating with the client devices 102A-102M. The servers 106A-106N are configured to execute computer programs that provide information to users in response to receiving requests from the users. For example, the information may include documents (Web pages, images, audio files, video files, etc.), output of executables, or any other suitable type of information. In accordance with some example embodiments, the servers 106A-106N are configured to host respective Web sites, so that the Web sites are accessible to users of the resource lifecycle event approval system 100.

One example type of computer program that may be executed by one or more of the servers 106A-106N is a computer security program. A computer security program is a computer program that provides security with regard to information and/or communications associated with a computing system. For instance, the information associated with the computing system may include information stored on the computing system and/or information accessed (e.g., read) by the computing system. The communications associated with the computing system may include communications received by the computing system and/or communications provided (e.g., transmitted) by the computing system. An example of a communication is an electronic message. In an aspect, the computing system includes one or more resources (e.g., cloud-based resource 110 and/or extension resource 112). Examples of a computer security program include Bitdefender^{®} security program, developed and distributed by Bitdefender IPR Management Ltd.; Norton^{®} security program, developed and distributed by Gen Digital Inc.; Avast^{®} security program, developed and distributed by Avast Software S.R.O.; McAfee^{®} security program, developed and distributed by McAfee, LLC; and Microsoft Defender^{®} security program, developed and distributed by Microsoft Corporation. It will be recognized that the example techniques described herein may be implemented using a computer security program. For instance, a software product (e.g., a subscription service, a non-subscription service, or a combination thereof) may include the computer security program, and the software product may be configured to perform the example techniques, though the scope of the example embodiments is not limited in this respect.

The computer security program may be a cloud native application protection platform (CNAPP). A CNAPP is an all-in-one platform that unifies security and compliance capabilities to prevent, detect, and respond to cloud security threats. A cloud security threat is a security threat that targets a cloud environment. For instance, the cloud security threat may target cloud-based resources (e.g., storage, computing, and/or networking resources that are accessible via the Internet), such as cloud-based resource 110 and/or extension resource 112. A CNAPP integrates multiple cloud security solutions, which traditionally have been siloed, into a common (e.g., single) user interface. The cloud security solutions may include cloud security posture management (CSPM), multipipeline development and operations (DevOps) security, a cloud workload protection platform (CWPP), cloud infrastructure entitlement management (CIEM), and cloud service network security (CSNS). CSPM provides a connected, prioritized view of potential vulnerabilities and misconfigurations across multi-cloud and hybrid environments. The CSPM continuously assesses overall security posture of a system and provides automated alerts and recommendations about critical issues that could expose the system to data breaches. The CSPM may include automated compliance management and remediation tools to identify and remedy compliance deficiencies. Multipipeline DevOps security provides a central console that enables management of DevOps security across multiple (e.g., all) pipelines. For instance, the multipipeline DevOps security may be used to reduce cloud misconfigurations and to scan new code to keep vulnerabilities therein from reaching a production environment. The multipipeline DevOps security may include infrastructure-as-code scanning tools that analyze configuration files from the earliest stages of development to confirm that new configuration files are compliant with security policies. A CWPP provides real-time detection and response to threats based on up-to-date information regarding multi-cloud workloads (e.g., virtual machines, containers, Kubernetes^{®} pods and/or clusters, databases, storage accounts, network layers, and app services). The CWPP may enable a quick investigation into threats and reduce the attack surface of a system. CIEM centralizes permissions management across a cloud and hybrid footprint, which inhibits (e.g., prevents) accidental or malicious misuse of permissions. CSNS complements the CWPP by protecting cloud infrastructure in real time. The CSNS may include any of a variety of security tools, including but not limited to distributed denial-of-service protection, web application firewalls, transport layer security examination, and load balancing.

A computer security program may be incorporated into a cloud computing program (a.k.a. a cloud service). A cloud computing program is a computer program that provides hosted service(s) via a network (e.g., network 104). For instance, the hosted service(s) may be hosted by any one or more of the servers 106A-106N. The cloud computing program may enable users (e.g., at any of the user systems 102A-102M) to access shared resources that are stored on or are otherwise accessible to the server(s) via the network.

The cloud computing program may provide hosted service(s) according to any of a variety of service models, including but not limited to Backend as a Service (BaaS), Software as a Service (SaaS), Platform as a Service (PaaS), and Infrastructure as a Service (laaS). BaaS enables applications (e.g., software programs) to use a BaaS provider's backend services (e.g., push notifications, integration with social networks, and cloud storage) running on a cloud infrastructure. SaaS enables a user to use a SaaS provider's applications running on a cloud infrastructure. PaaS enables a user to develop and run applications using a PaaS provider's application development environment (e.g., operating system, programming-language execution environment, database) on a cloud infrastructure. laaS enables a user to use an laaS provider's computer infrastructure (e.g., to support an enterprise). For example, laaS may provide to the user virtualized computing resources that utilize the laaS provider's physical computer resources.

Examples of a cloud computing program include but are not limited to a Google Cloud^{®} program developed and distributed by Google Inc.; an Oracle Cloud^{®} program developed and distributed by Oracle Corporation; an Amazon Web Services^{®} program developed and distributed by Amazon.com, Inc.; a Salesforce^{®} program developed and distributed by Salesforce.com, Inc.; an AppSource^{®} program developed and distributed by Microsoft Corporation; an Azure^{®} program developed and distributed by Microsoft Corporation; a GoDaddy^{®} program developed and distributed by GoDaddy.com LLC; and a Rackspace^{®} program developed and distributed by Rackspace US, Inc. It will be recognized that the example techniques described herein may be implemented using a cloud computing program. For instance, a software product (e.g., a subscription service, a non-subscription service, or a combination thereof) may include the cloud computing program, and the software product may be configured to perform the example techniques, though the scope of the example embodiments is not limited in this respect.

The first server(s) 106A are shown to include the cloud-based resource 110 and the extension resource 112 for illustrative purposes. The cloud-based resource 110 is configured to create the extension resource 224, as indicated by arrow 114, in response to receipt of a resource lifecycle event request, which requests performance of a resource lifecycle event with regard to the cloud-based resource 110. For instance, the cloud-based resource 110 may receive the resource lifecycle event request from one of the client devices 102A-102M. The cloud-based resource 110 interacts with the extension resource 112 to obtain an indication whether an approval criterion is satisfied. For instance, the cloud-based resource 110 may trigger the extension resource 112 to provide the indication by providing the resource lifecycle event request to the extension resource 112. In an example, satisfaction of the approval criterion is a prerequisite for performing the resource lifecycle event with regard to the cloud-based resource 110. In another example, satisfaction of the approval criterion confirms that all prerequisites for performing the resource lifecycle event are satisfied. The cloud-based resource 110 is configured to perform the resource lifecycle event with regard to the cloud-based resource 110 as a result of receiving an indication that the approval criterion is satisfied from the extension resource 112. The cloud-based resource 110 is configured not to perform the resource lifecycle event with regard to the cloud-based resource 110 as a result of not receiving an indication that the approval criterion is satisfied from the extension resource 112 (e.g., as a result of receiving an indication that the approval criterion is not satisfied from the extension resource 112).

The extension resource 112 is configured to provide an indication whether the approval criterion is satisfied to the cloud-based resource 110. The extension resource 112 receives the request to perform the resource lifecycle event from the cloud-based resource 110. In an implementation, the extension resource 112 identifies a designated approver 108 that has authority to grant approval to perform the resource lifecycle event with regard to the cloud-based resource 110. In accordance with the implementation, the designated approver 108 has the authority as a result of the designated approver 108 having an approver role 116, which is authorized to grant the approval to perform the resource lifecycle event with regard to the cloud-based resource 110. In further accordance with this implementation, the extension resource 112 obtains an explicit approval from the designated approver 108. The explicit approval grants approval to perform the resource lifecycle event with regard to the cloud-based resource 110. In further accordance with this implementation, as a result of an approval criterion being satisfied, the extension resource 112 triggers performance of the resource lifecycle event with regard to the cloud-based resource 110. The approval criterion includes (e.g., requires) obtainment of the explicit approval.

The designated approver 108 is a computing system or a user thereof that is configured to generate the explicit approval to perform the resource lifecycle event with regard to the cloud-based resource 110 (e.g., by using the approval authority that is obtained by the designated approver 108 as a result of the designated approver 108 being assigned the approver role 116). In an example, the designated approver 108 generates the explicit approval in response to receiving a request to approve performance of the resource lifecycle event with regard to the cloud-based resource 110 from the extension resource 112.

The cloud-based resource 110 may be implemented in various ways to perform its operations (e.g., interacting with the extension resource 112 to obtain an indication whether the approval criterion is satisfied), including being implemented in hardware, software, firmware, or any combination thereof. The extension resource 112 may be implemented in various ways to perform its operations (e.g., providing the indication whether the approval criterion is satisfied to the cloud-based resource 110), including being implemented in hardware, software, firmware, or any combination thereof. For example, each of the cloud-based resource 110 and the extension resource 112 may be implemented as computer program code configured to be executed in one or more processors. In another example, at least a portion of the cloud-based resource 110 and/or at least a portion of the extension resource 112 may be implemented as hardware logic/electrical circuitry. For instance, at least a portion of the cloud-based resource 110 and/or at least a portion of the extension resource 112 may be implemented in a field-programmable gate array (FPGA), an application-specific integrated circuit (ASIC), an application-specific standard product (ASSP), a system-on-a-chip system (SoC), a complex programmable logic device (CPLD), etc. Each SoC may include an integrated circuit chip that includes one or more of a processor (a microcontroller, microprocessor, digital signal processor (DSP), etc.), memory, one or more communication interfaces, and/or further circuits and/or embedded firmware to perform its functions.

It will be recognized that the extension resource 112 may be (or may be included in) a computer security program and/or a cloud computing program, though the scope of the example embodiments is not limited in this respect.

The cloud-based resource 110 and the extension resource 112 are shown to be incorporated in the first server(s) 106A for illustrative purposes and are not intended to be limiting. It will be recognized that the cloud-based resource 110 (or any portion(s) thereof) and/or the extension resource 112 (or any portion(s) thereof) may be incorporated in any one or more of the servers 106A-106N, any one or more of the client devices 102A-102M, or any combination thereof. For example, client-side aspects of the cloud-based resource 110 and/or the extension resource 112 may be incorporated in one or more of the client devices 102A-102M, and server-side aspects of the cloud-based resource 110 and/or the extension resource 112 may be incorporated in one or more of the servers 106A-106N.

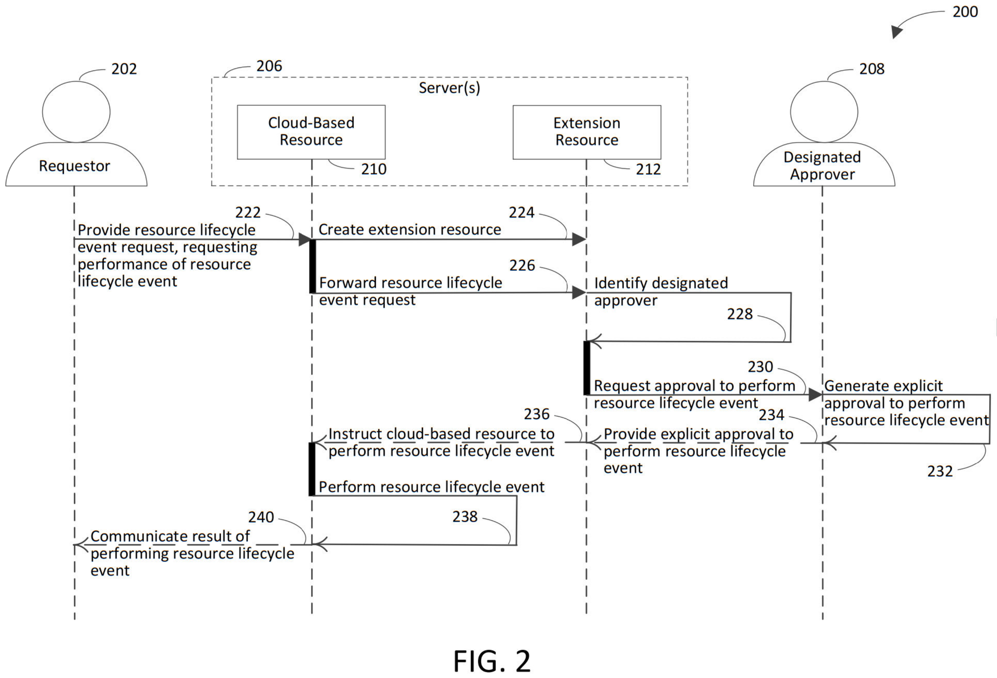

FIG. 2 is an example activity diagram 200 for performing role-based approval of a resource lifecycle event with regard to a cloud-based resource in accordance with an embodiment. FIG. 2 depicts a requestor 202, server(s) 026, and a designated approver 208. The server(s) 206 include a cloud-based resource 210 and an extension resource 212. Activities 222, 224, 226, 228, 230, 232, 234, 236, 238, and 240 will now be described with reference to the requestor 202, the cloud-based resource 210, the extension resource 212, and the designated approver 208.

In activity 222, the requestor 202 provides a resource lifecycle event request to the cloud-based resource 210. The resource lifecycle event request requests performance of a resource lifecycle event. The resource lifecycle event includes creation of the cloud-based resource 210, modification of the cloud-based resource 210, and/or deletion of the cloud-based resource 210. In an example, the resource lifecycle event consists of (e.g., is limited to and/or is selected from the group consisting of) the creation of the cloud-based resource 210, the modification of the cloud-based resource 210, and/or the deletion of the cloud-based resource 210. In an example, the requestor 202 provides the resource lifecycle event request to the cloud-based resource 210 in activity 222 as a result of the requestor 202 having authorization (e.g., permission) to perform the resource lifecycle event.

In an example resource creation embodiment, the resource lifecycle event includes the creation of the cloud-based resource 210. In accordance with this embodiment, the request from the requestor triggers creation of a non-functional placeholder that represents the cloud-based resource 210. In a disablement aspect of this embodiment, the non-functional placeholder is configured such that functionality of the cloud-based resource 210 is disabled. In an example, a switch that controls functionality of the cloud-based resource 210 is set in an "off" state, which causes the functionality to be turned off (i.e., to be disabled).

In activity 224, the cloud-based resource 210 creates the extension resource 212. In an implementation, the cloud-based resource 210 creates code that defines the extension resource 212. In an aspect of this implementation, the cloud-based resource 210 configures the extension resource 212 to be in a functional state. In the resource creation embodiment mentioned above with regard to activity 222, the non-functional placeholder that represents the cloud-based resource 210 creates the extension resource 212. In an example, the cloud-based resource 210 creates the extension resource 212 as an extension of the cloud-based resource 210. In accordance with this example, the extension resource 212 extends functionality of the cloud-based resource 210. In another example, the extension resource 212 is unable to exist in absence of the cloud-based resource 210.

In activity 226, the cloud-based resource 210 forwards the resource lifecycle event request to the extension resource 212. In the resource creation embodiment, the non-functional placeholder that represents the cloud-based resource 210 forwards the resource lifecycle event request to the extension resource 212.

In activity 228, the extension resource 212 identifies the designated approver 208. In an example, the extension resource 212 identifies the designated approver 208 based on (e.g., based at least on) the designated approver 208 being assigned an approver role, which is authorized to grant approval to perform the resource lifecycle event with regard to the cloud-based resource 210.

In activity 230, the extension resource 212 sends an approval request to the designated approver 208. The approval request requests approval to perform the resource lifecycle event.

In activity 232, the designated approver 208 generates explicit approval to perform the resource lifecycle event. In an example, the extension resource 212 sending the approval request to the designated approver in activity 230 triggers the designated approver 208 to generate the explicit approval.

In activity 234, the designated approver 208 provides the explicit approval to perform the resource lifecycle event to the extension resource 212. In an example, the designated approver 208 providing the explicit approval to the extension resource 212 prevents the designated approver 208 from subsequently (i.e., after the explicit approve is provided) denying the request to perform the resource lifecycle event. In accordance with this example, the designated approver 208 is unable to change its response to the approval request from the explicit approval to a denial of approval to perform the resource lifecycle event.

In activity 236, the extension resource 212 provides a performance instruction to the cloud-based resource 210. The performance instruction instructs (e.g., triggers) the cloud-based resource 210 to perform the resource lifecycle event. For instance, the performance instruction may inform the cloud-based resource 210 that the explicit approval has been obtained.

In the resource creation embodiment, the extension resource 212 provides the performance instruction to the non-functional placeholder that represents the cloud-based resource 210. In accordance with this embodiment, the performance instruction instructs the non-functional placeholder to transform itself into a functional representation of the cloud-based resource 210.

In activity 238, the cloud-based resource 210 performs the resource lifecycle event. In the resource creation embodiment, the non-functional placeholder that represents the cloud-based resource 210 transforms itself into the functional representation of the cloud-based resource 210. In an example, the placeholder performs this transformation by enabling the functionality of the cloud-based resource 210. In an implementation of this example, the placeholder enables the functionality of the cloud-based resource 210 by filling itself with content that defines the functionality of the cloud-based resource 210. In the disablement aspect of this embodiment mentioned above with regard to activity 222, the placeholder transforms itself into the functional representation of the cloud-based resource 210 by switching the switch, which controls the functionality of the cloud-based resource 210, from the "off" state to an "on" state. In accordance with the disablement aspect, switching the switch from the "off" state to the "on" state (i.e., setting the switch to be in the "on" state) causes the functionality of the cloud-based resource 210 to be turned on (i.e., to be enabled).

In activity 240, the cloud-based resource 210 communicates a result of performing the resource lifecycle event to the requestor 202. In an example, communicating the result includes causing an audio, visual, and/or haptic notification, which indicates the result, to be provided (e.g., presented) to the requestor 202. In an aspect of this example, the notification includes a verbal or textual statement, which states that the resource lifecycle event has been performed. In another aspect of this example, the haptic notification includes a vibration, which indicates that the resource lifecycle event has been performed.

In some example embodiments, one or more of the activities 222, 224, 226, 228, 230, 232, 234, 236, 238, and/or 240 of the activity diagram 200 are not performed. Moreover, in some example embodiments, activities in addition to or in lieu of the activities 222, 224, 226, 228, 230, 232, 234, 236, 238, and/or 240 are performed.

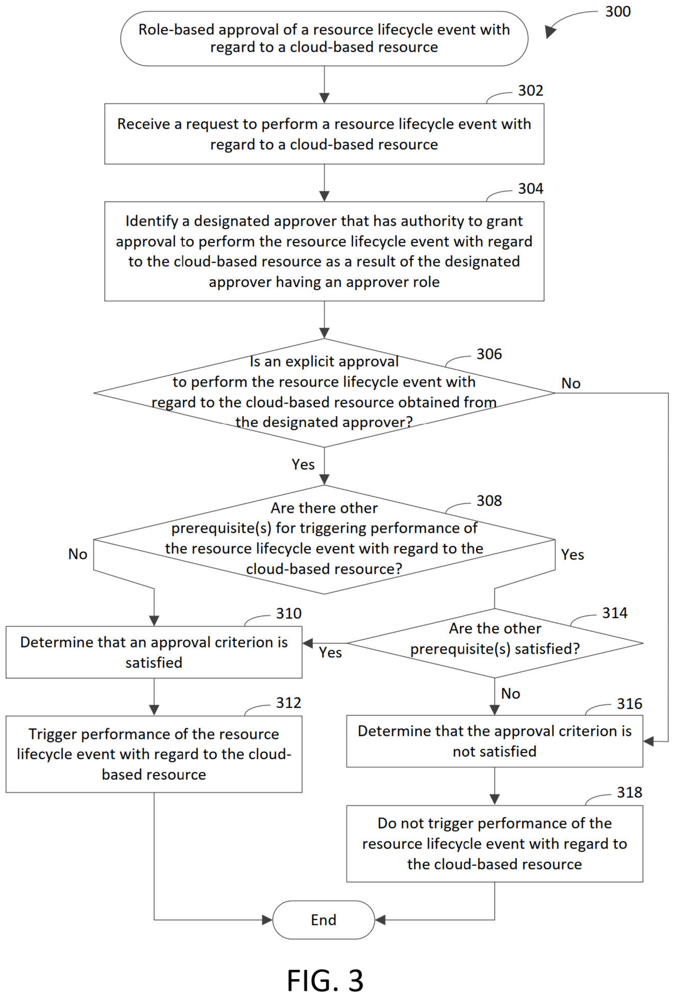

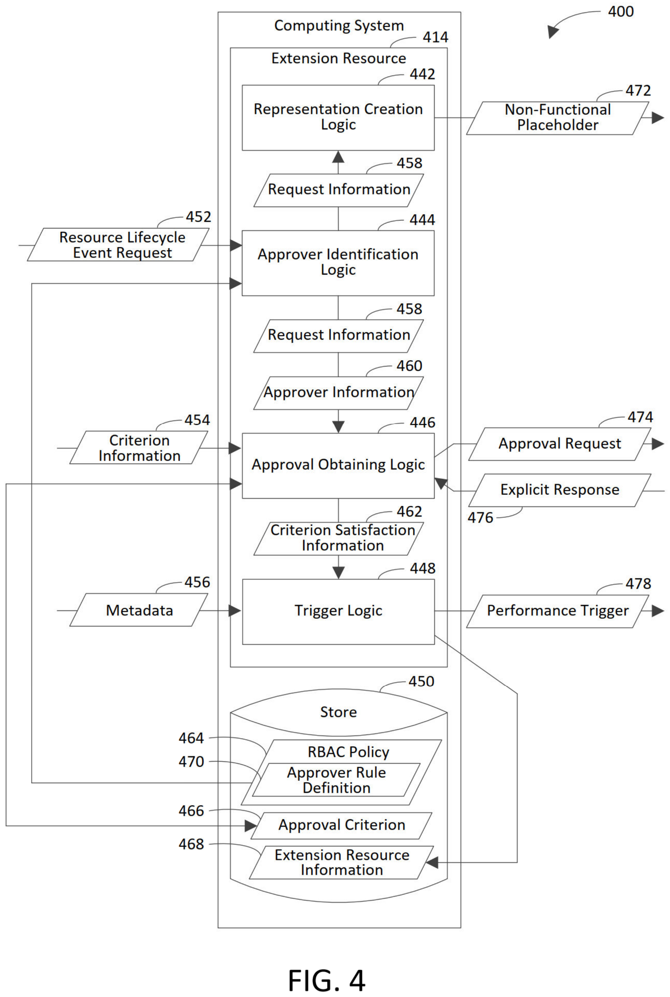

FIG. 3 depicts a flowchart 300 of an example method for performing role-based approval of a resource lifecycle event with regard to a cloud-based resource in accordance with an embodiment. Flowchart 300 may be performed by the first server(s) 106A shown in FIG. 1, for example. For illustrative purposes, flowchart 300 is described with respect to a computing system 400 shown in FIG. 4, which is an example implementation of the first server(s) 106A. As shown in FIG. 4, the computing system 400 includes an extension resource 414 and a store 450. The extension resource 414 includes representation creation logic 442, approver identification logic 444, approval obtaining logic 446, and trigger logic 448. The store 450 may be any suitable type of store. One type of store is a database. For instance, the store 450 may be a relational database, an entity-relationship database, an object database, an object relational database, an extensible markup language (XML) database, etc. The store 450 is shown to store a role-based access control (RBAC) policy 464, an approval criterion 466, and extension resource information 468 for non-limiting, illustrative purposes. The RBAC policy 464 includes an approver role definition 470. Further structural and operational embodiments will be apparent to persons skilled in the relevant art(s) based on the discussion regarding flowchart 300.

As shown in FIG. 3, the method of flowchart 300 begins at step 302. In step 302, a request to perform a resource lifecycle event with regard to a cloud-based resource is received. In an example, the request is initiated by a user selecting a virtual button that is configured to generate the request. In accordance with this example, the virtual button is included in an interface (e.g., a graphical user interface) of a client device that is owned by or otherwise associated with (e.g., controlled by) the user. In another example, the cloud-based resource is provided by a cloud-computing platform (a.k.a. a cloud computing program). In an example implementation, the approver identification logic 444 receives a resource lifecycle event request 452, which requests performance of the resource lifecycle event with regard to the cloud-based resource.

At step 304, a designated approver is identified. The designated approver has authority to grant approval to perform the resource lifecycle event with regard to the cloud-based resource as a result of the designated approver having an approver role. The approver role is authorized to grant the approval to perform the resource lifecycle event with regard to the cloud-based resource. In an example, the designated approver is included in an organization to which the cloud-based resource belongs. In another example, the approver role is defined by a role-based access control (RBAC) policy 464 (e.g., of a cloud-computing platform) to have the authority to grant the approval to perform the resource lifecycle event with regard to the cloud-based resource. For instance, the RBAC policy 464 may include the approver rule definition 470 to define the approver role. In an example implementation, the approver identification logic 444 identifies the designated approver. In an aspect, the approver identification logic 444 provides request information 458 and approver information 460 to the approval obtaining logic 446. The request information 458 includes information about the resource lifecycle event request 452. For example, the request information 458 may include the resource lifecycle event request 452, a description of the resource lifecycle event, an identifier that identifies the cloud-based resource, and/or a description of the cloud-based resource. The approver information 460 includes an identifier that identifies the designated approver and/or a description of the designated approver.

At step 306, a determination is made whether explicit approval to perform the resource lifecycle event with regard to the cloud-based resource is obtained from the designated approver. In an example, implementation, the approval obtaining logic 446 determines whether the explicit approval to perform the resource lifecycle event with regard to the cloud-based resource is obtained from the designated approver. In an aspect, the approval obtaining logic 446 receives an explicit response 476, which includes the explicit approval or an explicit denial. The explicit approval grants approval to perform the resource lifecycle event with regard to the cloud-based resource. The explicit denial denies the approval. For instance, the explicit denial may prohibit the performance of the resource lifecycle event with regard to the cloud-based resource. If the explicit approval is obtained from the designated approver, flow continues to step 308. Otherwise, flow continues to step 316.

In an example embodiment, the approval obtaining logic 446 obtains the explicit approval from the designated approver. In an aspect of this embodiment, the approval obtaining logic 446 provides an approval request 474, which solicits approval to perform the resource lifecycle event with regard to the cloud-based resource, to the designated approver. In accordance with this aspect, the approval obtaining logic 446 receives an explicit response 476 from the designated approver in response to the approval request 474. In further accordance with this aspect, the explicit response 476 includes the explicit approval.

In another example embodiment, step 306 includes obtaining the explicit approval to perform the resource lifecycle event with regard to the cloud-based resource from the designated approver. In an expiration aspect of this embodiment, an approval request is configured to expire at an expiration time instance that temporally follows a provision time instance by a specified amount of time. The expiration time instance is a time instance at which the approval request expires. Expiration of the approval request causes the approval request to be incapable of being approved by the designated approver. The provision time instance is a time instance at which the approval request is provided to the designated approver. The approval request solicits approval of the approval request. Approval of the approval request grants approval to perform the resource lifecycle event with regard to the cloud-based resource. In an example implementation, the approval obtaining logic 446 configures the approval request 474 to expire at the expiration time instance. In accordance with this implementation, the expiration time instance is a time instance at which the approval request 474 expires. In further accordance with this implementation, expiration of the approval request 474 causes the approval request 474 to be incapable of being approved by the designated approver. The provision time instance, is a time instance at which the approval request 474 is provided to the designated approver. The approval request 474 solicits approval of the approval request 474. Approval of the approval request 474 grants approval to perform the resource lifecycle event with regard to the cloud-based resource. In accordance with the expiration aspect, the approval request is provided to the designated approver at the provision time instance. In an example implementation, the approval obtaining logic 446 provides the approval request 474 to the designated approver at the provision time instance. In further accordance with the expiration aspect, the explicit approval is received from the designated approver prior to the expiration time instance. In an example implementation, the approval obtaining logic 446 receives the explicit response 476, which includes the explicit approval, form the designated approver prior to the expiration time instance.

At step 308, a determination is made whether there are other prerequisite(s) for triggering the performance of the resource lifecycle event with regard to the cloud-based resource. In an example implementation, the approval obtaining logic 446 determines whether there are other prerequisite(s) (e.g., in addition to obtainment of the explicit approval) for triggering the performance of the resource lifecycle event with regard to the cloud-based resource. In an aspect, the approval obtaining logic 446 retrieves the approval criterion 466 from the store 450. In accordance with this aspect, the approval obtaining logic 446 analyzes the approval criterion 466 to determine whether other prerequisite(s) for triggering the performance of the resource lifecycle event with regard to the cloud-based resource exist. For instance, the approval criterion 466 may indicate (e.g., specify or describe) all prerequisites that are to be satisfied prior to the performance of the resource lifecycle event with regard to the cloud-based resource. In an example, the approval criterion 466 includes a single prerequisite, which is obtainment of the explicit approval. In another example, the approval criterion 466 requires satisfaction of one or more other prerequisites in addition to the obtainment of the explicit approval. If there are no other prerequisite(s) for triggering the performance of the resource lifecycle event with regard to the cloud-based resource, flow continues step 310. However, if there are other prerequisite(s) for triggering the performance of the resource lifecycle event with regard to the cloud-based resource, flow continues to step 314.

At step 310, a determination is made that the approval criterion is satisfied. In an example implementation, the approval obtaining logic 446 determines that the approval criterion 466 is satisfied. The approval obtaining logic 446 generates criterion satisfaction information 462. In an aspect of this implementation, the criterion satisfaction information 462 indicates that the approval criterion 466 is satisfied.

At step 312, the performance of the resource lifecycle event with regard to the cloud-based resource is triggered. In an example implementation, the trigger logic 448 provides a performance trigger 478, which triggers the performance of the resource lifecycle event with regard to the cloud-based resource. In an aspect of this implementation, the trigger logic 448 provide the performance trigger 478 (and thereby trigger the performance of the resource lifecycle event with regard to the cloud-based resource) based on (e.g., in response to or as a result of) the criterion satisfaction information 462 indicating that the approval criterion 466 is satisfied. Upon completion of step 312, flowchart 300 ends.

In an example embodiment, the performance of the resource lifecycle event with regard to the cloud-based resource is triggered at step 312 by informing the cloud-based resource of the approval criterion being satisfied. In an aspect, the cloud-based resource is informed of the approval criterion being satisfied by calling a post action (a.k.a. callback) that is exposed by the cloud-based resource. The post action is configured to perform the resource lifecycle event. A callback is a function that is passed as an argument to another function and that is configured to execute in response to a triggering event. For instance, the triggering event may be performance of an operation, a variable having a specified (e.g., predetermined) value, a variable being greater than or equal to a threshold value, a variable being less than or equal to a threshold value, and so on.

In another example embodiment, triggering the performance of the resource lifecycle event with regard to the cloud-based resource at step 312 includes blocking the performance of the resource lifecycle event with regard to the cloud-based resource until the approval criterion is satisfied.

At step 314, a determination is made whether the other prerequisite(s) are satisfied. In an example implementation, the approval obtaining logic 446 determines whether the other prerequisite(s) are satisfied. In an aspect, the approval obtaining logic 446 analyzes log(s) to determine whether the other prerequisite(s) are satisfied. If the other prerequisite(s) are satisfied, flow continues to step 310. Otherwise, flow continues to step 316.

At step 316, a determination is made that the approval criterion is not satisfied. In an example implementation, the approval obtaining logic 446 determines that the approval criterion 466 is not satisfied. The approval obtaining logic 446 generates criterion satisfaction information 462. In an aspect of this implementation, the criterion satisfaction information 462 indicates that the approval criterion 466 is not satisfied.

At step 318, the performance of the resource lifecycle event with regard to the cloud-based resource is not triggered. In an aspect, not triggering the performance of the resource lifecycle event with regard to the cloud-based resource at step 318 includes blocking the performance of the resource lifecycle event with regard to the cloud-based resource. In an example implementation, the trigger logic 448 does not provide the performance trigger 478 (and therefore does not trigger the performance of the resource lifecycle event with regard to the cloud-based resource). In an aspect of this implementation, the trigger logic 448 does not trigger the performance of the resource lifecycle event with regard to the cloud-based resource based on (e.g., in response to or as a result of) the criterion satisfaction information 462 indicating that the approval criterion 466 is not satisfied. Upon completion of step 318, flowchart 300 ends.

In an example embodiment, a policy identifies the designated approver and indicates that obtaining the explicit approval from the designated approver is a prerequisite for triggering the performance of the resource lifecycle event with regard to the cloud-based resource. In accordance with this embodiment, satisfaction of the approval criterion includes (e.g., requires) satisfaction of the prerequisite. The policy may identify any suitable number of designated approvers and may indicate that obtaining explicit approvals from the identified designated approvers is a prerequisite for triggering the performance of the resource lifecycle event with regard to the cloud-based resource.

In some example embodiments, one or more steps 302, 304, 306, 308, 310, 312, 314, 316, and/or 318 of flowchart 300 may not be performed. Moreover, steps in addition to or in lieu of steps 302, 304, 306, 308, 310, 312, 314, 316, and/or 318 may be performed. For instance, in an example resource creation embodiment, the resource lifecycle event includes (e.g., is) creation of the cloud-based resource. In a first aspect of the resource creation embodiment, receiving the request to perform the resource lifecycle event with regard to the cloud-based resource at step 302 includes receiving a request to create the cloud-based resource. In an example implementation, the approver identification logic 444 receives the resource lifecycle event request 452, which requests creation of the cloud-based resource. In accordance with this implementation, the approver identification logic 444 generates the request information to indicate that the cloud-based resource is to be created. In accordance with the first aspect, the method of flowchart 300 further includes, as a result of receiving the request to create the cloud-based resource at step 302, creating a non-functional placeholder that represents the cloud-based resource. For instance, the non-functional placeholder may be created by default (e.g., as a result of approval to create the cloud-based resource not yet being received). In a denied assignment example, a user who initiated the request to perform the resource lifecycle event with regard to the cloud-based resource has a denied assignment by default, wherein the denied assignment is a policy or a rule that prohibits the user from performing the resource lifecycle event with regard to the cloud-based resource (or from causing the resource lifecycle event to be performed). In accordance with the denied assignment example, the non-functional placeholder is created by default as a result of the user having the denied assignment by default. In an example implementation, the representation creation logic 442 creates a non-functional placeholder 472 that represents the cloud-based resource based on receipt of the request information 458 (e.g., based on the request information 458 indicating that the cloud-based resource is to be created. In further accordance with the first aspect, triggering the performance of the resource lifecycle event with regard to the cloud-based resource at step 312 includes triggering creation of the cloud-based resource by causing the non-functional placeholder to be filled with content that includes functionality of the cloud-based resource. For instance, triggering the creation of the cloud-based resource may include causing (e.g., triggering) the non-functional placeholder to fill itself with the content that includes the functionality of the cloud-based resource. It will be recognized that the non-functional placeholder filled with the content that includes the functionality of the cloud-based resource is a functional representation of (e.g., constitutes) the cloud-based resource. In accordance with the denied assignment example mentioned above, determining that the approval criterion is satisfied at step 310 includes determining that the denied assignment has been removed (e.g., deleted). In an example implementation, the trigger logic 448 triggers creation of the cloud-based resource by causing the non-functional placeholder 472 to be filled with the content that includes the functionality of the cloud-based resource.

In a second aspect of the resource creation embodiment, triggering the performance of the resource lifecycle event with regard to the cloud-based resource at step 312 includes, as a first result of the approval criterion being satisfied, triggering the creation of the cloud-based resource. In accordance with the second aspect, triggering the performance of the resource lifecycle event with regard to the cloud-based resource at step 312 further includes, as a second result of the approval criterion being satisfied, triggering creation of a second cloud-based resource on which the cloud-based resource depends. It will be recognized that, as the second result, any suitable number (e.g., 1, 2, 5, 10, or 20) of second cloud-based resources on which the cloud-based resource depends may be created.

In an example resource modification embodiment, the resource lifecycle event includes modification of the cloud-based resource. In an aspect, the modification of the cloud-based resource includes a change of an attribute of the cloud-based resource. In accordance with this aspect, the modification of the cloud-based resource may include an update to the cloud-based resource. In an example, the update to the cloud-based resource includes replacing a first version (e.g., release) of the cloud-based resource with a second version of the cloud-based resource, which temporally follows the first version.

In an example resource deletion embodiment, the resource lifecycle event includes deletion of the cloud-based resource.

In another example embodiment, the method of flowchart 300 is implemented by an extension resource (e.g., extension resource 414) that executes on the computing system (e.g., computing system 400). In accordance with this embodiment, the method of flowchart 300 further includes storing information about the extension resource in persistent storage that survives deletion of the extension resource (e.g., for purposes of auditing, compliance, and analysis). Examples of information about the extension resource include but are not limited to a type of the extension resource; an approval request timestamp, which indicates a date and/or a time at which the extension resource provides the approval request (i.e., the request to approve the performance of the resource lifecycle event) to the designated approver; an approval timestamp, which indicates a date and/or a time at which the request to perform the resource lifecycle event (i.e., the resource lifecycle event request) was approved; a deletion timestamp, which indicates a date and/or a time at which the extension resource was deleted; an approver identifier, which indicates an identity of the designated approver; a requestor identifier, which indicates an identity of a user who initiates the resource lifecycle event request; a "deleted by" indicator, which indicates an entity (e.g., human or resource) that deletes the extension resource; a cloud-based resource identifier, which identifies the cloud-based resource that created the extension resource; and deletion reason information, which indicates a reason that the extension resource was deleted. For instance, the extension resource may have been deleted because the cloud-based resource that created the extension resource was deleted. It will be recognized that the information about the extension resource does not include the extension resource. In an aspect, the extension resource cannot be recovered after the extension resource is deleted. In an example implementation, the trigger logic 448 stores extension resource information 468, which includes the information about the extension resource. In accordance with this implementation, the store 450 (or a portion of the store 450 in which the extension resource information 468 is stored) survives the deletion of the extension resource.

In an example multi-approver embodiment, the method of flowchart 300 further includes identifying a second designated approver that has authority to grant approval to perform the resource lifecycle event with regard to the cloud-based resource as a result of the second designated approver having the approver role. In an example implementation, the approver identification logic 444 identifies the second designated approver that has authority to grant approval to perform the resource lifecycle event with regard to the cloud-based resource. In accordance with this implementation, the approver identification logic 444 configures the approver information 460 to include an identifier that identifies the second designated approver and/or a description of the second designated approver. In accordance with the multi-approver embodiment, the method of flowchart 300 further includes obtaining a second explicit approval from the second designated approver. The second explicit approval grants approval to perform the resource lifecycle event with regard to the cloud-based resource. In an example implementation, the approval obtaining logic 446 obtains the second explicit approval from the second designated approver. In an aspect, the approval obtaining logic 446 obtains the second explicit approval by configuring the approval request 474 to solicit approval from the second designated approver to perform the resource lifecycle event with regard to the cloud-based resource. In accordance with this aspect, the approval obtaining logic 446 obtains the second explicit approval further by receiving the explicit response 476, which includes the second explicit approval, in response to the approval request 474. In further accordance with the multi-approver embodiment, the approval criterion includes the obtainment of the explicit approval and further comprises obtainment of the second explicit approval.

In an aspect of the multi-approver embodiment, the approval criterion includes obtainment of explicit approvals from a number of designated approvers that is greater than or equal to a threshold number. In accordance with this aspect, each designated approver has the approver role. In further accordance with this aspect, each explicit approval grants approval to perform the resource lifecycle event with regard to the cloud-based resource. The threshold number may be any suitable positive integer that is greater than or equal to two (e.g., 2, 3, 5, or 8).

In another example embodiment, the method of flowchart 300 further includes receiving criterion information, which describes (e.g., includes) the approval criterion, from the cloud-based resource. In an example implementation, the approval obtaining logic 446 receives criterion information 454, which describes the approval criterion 466, from the cloud-based resource. For instance, the approval obtaining logic 446 may store the approval criterion 466 in the store 450 as a result of receiving the criterion information 454 from the cloud-based resource. In accordance with this embodiment, as a result of receiving the criterion information from the cloud-based resource, a determination is made that the approval criterion is satisfied. In an example implementation, the approval obtaining logic 446 determines that the approval criterion 466 is satisfied as a result of receiving the criterion information 454 from the cloud-based resource.

In yet another example embodiment, the method of flowchart 300 further includes receiving metadata, which describes an attribute of the resource lifecycle event, from the cloud-based resource. In an aspect, the attribute includes (e.g., is) data that is consumed (e.g., required) by the resource lifecycle event and/or a type of the resource lifecycle event. Examples of a type of the resource lifecycle event include creation (of the cloud-based resource), modification (of the cloud-based resource), and deletion (of the cloud-based resource). In an example implementation, the trigger logic 448 receives metadata 456, which describes the attribute of the resource lifecycle event, from the cloud-based resource. In accordance with this embodiment, the performance of the resource lifecycle event with regard to the cloud-based resource is triggered at step 312 using the metadata by providing the metadata to the cloud-based resource. In an example implementation, the trigger logic 448 triggers the performance of the resource lifecycle event with regard to the cloud-based resource using the metadata 456 by providing the metadata 456 to the cloud-based resource. For instance, the trigger logic 448 may configure the performance trigger 478 to include the metadata 456.

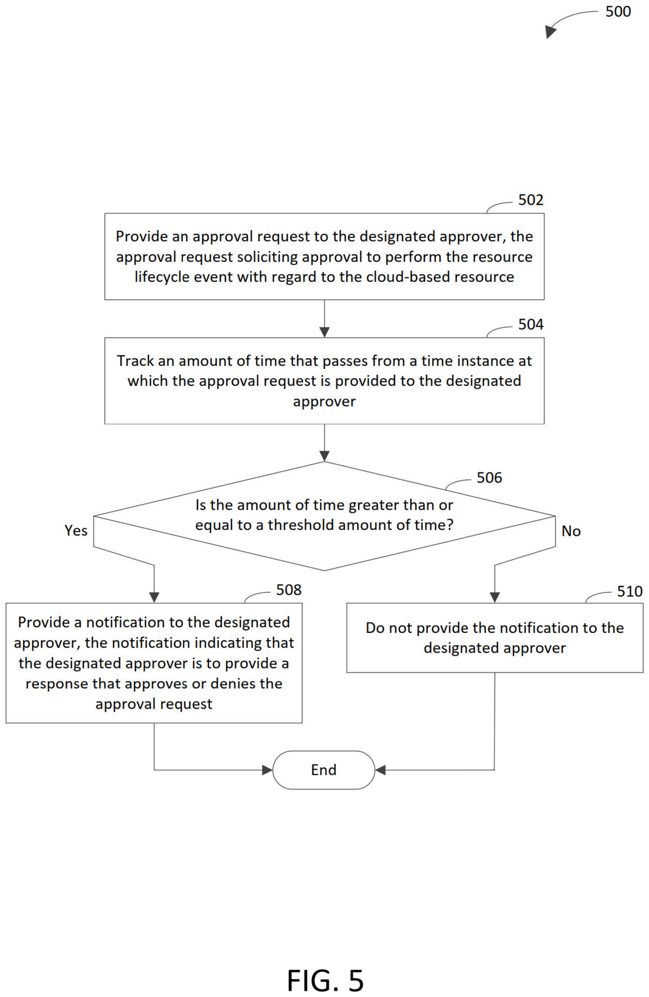

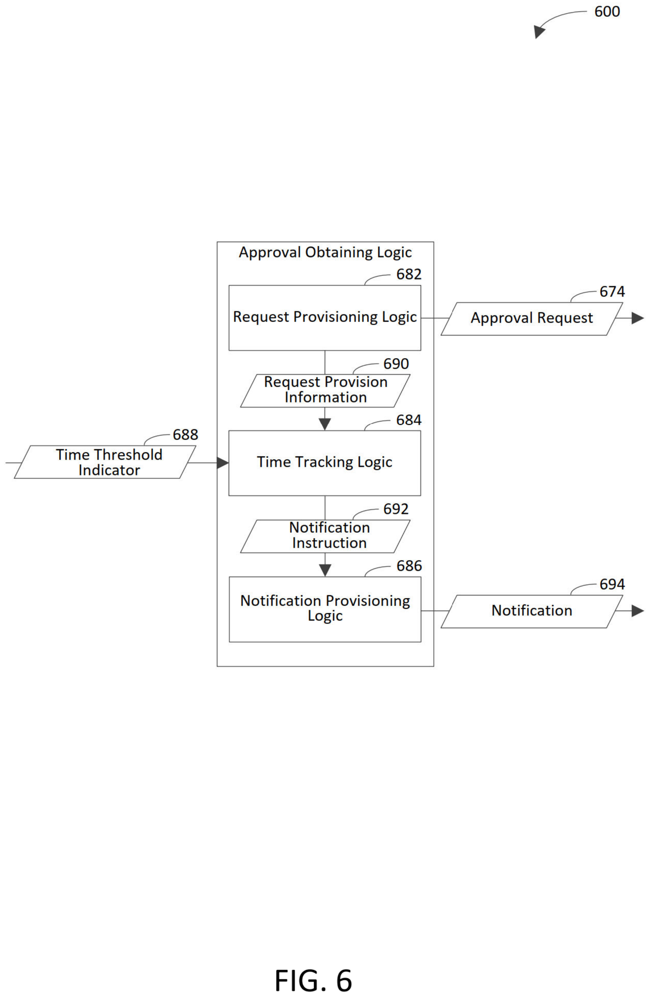

In still another example embodiment, the method of flowchart 300 further includes one or more steps of flowchart 500 shown in FIG. 5. FIG. 5 depicts a flowchart 500 of another example method for performing role-based approval of a resource lifecycle event with regard to a cloud-based resource in accordance with an embodiment. Flowchart 500 may be performed by the approval obtaining logic 446 shown in FIG. 4, for example. For illustrative purposes, flowchart 500 is described with respect to approval obtaining logic 600 shown in FIG. 6, which is an example implementation of the approval obtaining logic 446. As shown in FIG. 6, the approval obtaining logic 600 includes request provisioning logic 682, time tracking logic 684, and notification provisioning logic 686. Further structural and operational embodiments will be apparent to persons skilled in the relevant art(s) based on the discussion regarding flowchart 500.

It will be recognized that the computing system 400 may not include one or more of the extension resource 414, the representation creation logic 442, the approver identification logic 444, the approval obtaining logic 446, the trigger logic 448, and/or the store 450. Furthermore, the computing system 400 may include components in addition to or in lieu of the extension resource 414, the representation creation logic 442, the approver identification logic 444, the approval obtaining logic 446, the trigger logic 448, and/or the store 450.

As shown in FIG. 5, the method of flowchart 500 begins at step 502. In step 502, an approval request is provided to the designated approver. The approval request solicits approval to perform the resource lifecycle event with regard to the cloud-based resource. In an example implementation, the request provisioning logic 682 provides an approval request 674 to the designated approver. The approval request 674 solicits approval to perform the resource lifecycle event with regard to the cloud-based resource. The request provisioning logic 682 generates request provision information 690, which indicates a time instance at which the approval request 674 is provided to the designated approver.

At step 504, an amount of time that passes from a time instance at which the approval request is provided to the designated approver is tracked. In an example implementation, the time tracking logic 684 tracks an amount of time that passes from a time instance at which the approval request 674 is provided to the designated approver. In an aspect, the time tracking logic 684 monitors a difference between a start time, which is defined by the time instance at which the approval request 674 is provided to the designated approver, and an end time, which is defined by a current time. Accordingly, as time passes, the difference becomes greater. In an example of this aspect, the time tracking logic 684 analyzes the request provision information 690 to determine the time instance at which the approval request 674 is provided to the designated approver.

At step 506, a determination is made whether the amount of time that passes from the time instance at which the approval request is provided to the designated approver is greater than or equal to a threshold amount of time. In an example implementation, the time tracking logic 684 determines whether the amount of time that passes from the time instance at which the approval request 674 is provided to the designated approver is greater than or equal to the threshold amount of time, which is indicated by a time threshold indicator 688. For instance, the time tracking logic 684 may make the determination by comparing the amount of time and the threshold amount of time. If the amount of time that passes is greater than or equal to the threshold amount of time, flow continues to step 508. Otherwise, flow continues to step 510.

At step 508, a notification is provided to the designated approver. The notification indicates that the designated approver is to provide a response that approves or denies the approval request. In an example implementation, the notification provisioning logic 686 provides a notification 694 to the designated approver. The notification 694 indicates that the designated approver is to provide a response that approves or denies the approval request 674. In an aspect of this implementation, the time tracking logic 684 provides a notification instruction 692 to the notification provisioning logic 686 as a result of the amount of time that passes being greater than or equal to the threshold amount of time. For instance, the time tracking logic 684 may be triggered to provide the notification instruction 692 based on the amount of time being greater than or equal to the threshold amount of time. The notification instruction 692 instructs the notification provisioning logic 686 to provide the notification 694 to the designated approver. In accordance with this aspect, the notification provisioning logic 686 provides the notification 694 to the designated approver in response to receipt of the notification instruction 692 (e.g., as a result of the notification instruction 692 instructing the notification provisioning logic 686 to provide the notification 694 to the designated approver).

At step 510, the notification is not provided to the designated approver. In an example implementation, the notification provisioning logic 686 does not provide the notification 694 to the designated approver. In an aspect, the notification provisioning logic 686 does not provide the notification 694 to the designated approver as a result of the notification instruction 692 not being received from the time tracking logic 684.

In some example embodiments, one or more steps 502, 504, 506, 508, and/or 510 of flowchart 500 may not be performed. Moreover, steps in addition to or in lieu of steps 502, 504, 506, 508, and/or 510 may be performed.

It will be recognized that the approval obtaining logic 600 may not include one or more of the request provisioning logic 682, the time tracking logic 684, and/or the notification provisioning logic 686. Furthermore, the approval obtaining logic 600 may include components in addition to or in lieu of the request provisioning logic 682, the time tracking logic 684, and/or the notification provisioning logic 686.

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods may be used in conjunction with other methods.

Any one or more of the cloud-based resource 110, the extension resource 112, the requestor 202, the designated approver 208, the cloud-based resource 210, the extension resource 212, the extension resource 414, the representation creation logic 442, the approver identification logic 444, the approval obtaining logic 446, the trigger logic 448, the request provisioning logic 682, the time tracking logic 684, the notification provisioning logic 686, activity diagram 200, flowchart 300, and/or flowchart 500 may be implemented in hardware, software, firmware, or any combination thereof.

For example, any one or more of the cloud-based resource 110, the extension resource 112, the requestor 202, the designated approver 208, the cloud-based resource 210, the extension resource 212, the extension resource 414, the representation creation logic 442, the approver identification logic 444, the approval obtaining logic 446, the trigger logic 448, the request provisioning logic 682, the time tracking logic 684, the notification provisioning logic 686, activity diagram 200, flowchart 300, and/or flowchart 500 may be implemented, at least in part, as computer program code configured to be executed in one or more processors.

In another example, any one or more of the cloud-based resource 110, the extension resource 112, the requestor 202, the designated approver 208, the cloud-based resource 210, the extension resource 212, the extension resource 414, the representation creation logic 442, the approver identification logic 444, the approval obtaining logic 446, the trigger logic 448, the request provisioning logic 682, the time tracking logic 684, the notification provisioning logic 686, activity diagram 200, flowchart 300, and/or flowchart 500 may be implemented, at least in part, as hardware logic/electrical circuitry. Such hardware logic/electrical circuitry may include one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. For instance, a SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

### II. Further Discussion of Some Example Embodiments

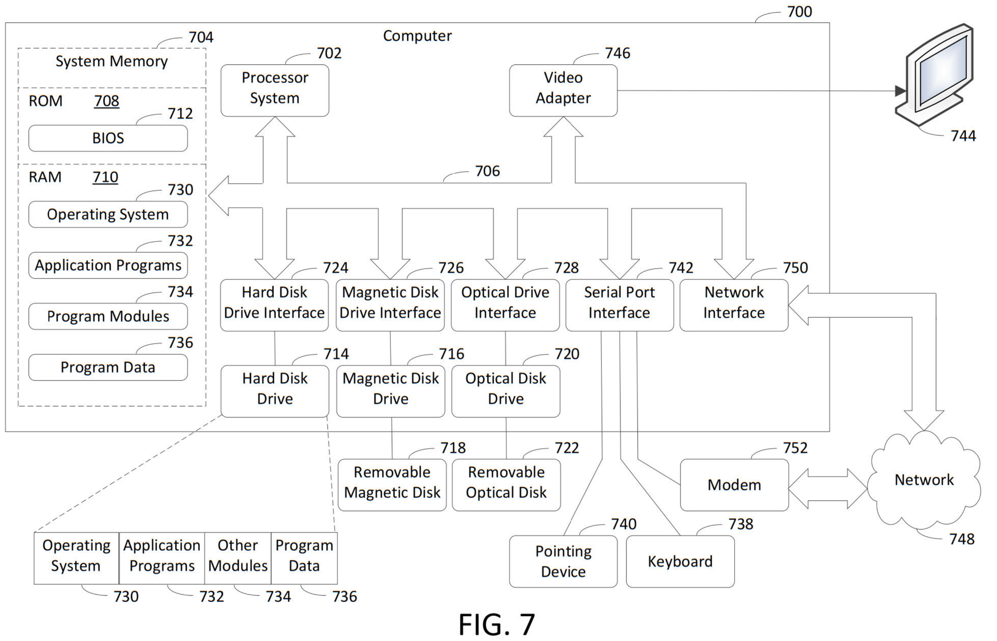

(A1) An example system (Figure 1, 102A-102M, 106A-106N; Figure 2, 206; Figure 4, 400; Figure 7, 700) comprises a processor system (Figure 7, 702) and a memory (Figure 7, 704, 708, 710) that stores computer-executable instructions. The computer-executable instructions are executable by the processor system to at least receive (Figure 2, 226; Figure 3, 302) a request (Figure 4, 452) to perform a resource lifecycle event with regard to a cloud-based resource (Figure 1, 110; Figure 2, 210). The computer-executable instructions are executable by the processor system further to at least identify (Figure 2, 228; Figure 3, 304) a designated approver (Figure 1, 108; Figure 2, 208) that has authority to grant approval to perform the resource lifecycle event with regard to the cloud-based resource as a result of the designated approver having an approver role (Figure 1, 116), which is authorized to grant the approval to perform the resource lifecycle event with regard to the cloud-based resource. The computer-executable instructions are executable by the processor system further to at least obtain (Figure 2, 234; Figure 3, 306) an explicit approval (Figure 4, 476) from the designated approver. The explicit approval grants approval to perform the resource lifecycle event with regard to the cloud-based resource. The computer-executable instructions are executable by the processor system further to at least, as a result of an approval criterion (Figure 4, 466) being satisfied, trigger (Figure 2, 236; Figure 3, 312) performance of the resource lifecycle event with regard to the cloud-based resource, the approval criterion comprising obtainment of the explicit approval.

(A2) In the example system of A1, wherein the resource lifecycle event includes creation of the cloud-based resource.

(A3) In the example system of any of A1-A2, wherein the computer-executable instructions are executable by the processor system to at least: receive a request to create the cloud-based resource; as a result of the request to create the cloud-based resource being received, create a non-functional placeholder that represents the cloud-based resource; and trigger creation of the cloud-based resource by causing the non-functional placeholder to be filled with content that includes functionality of the cloud-based resource.

(A4) In the example system of any of A1-A3, wherein the computer-executable instructions are executable by the processor system to at least: as a first result of the approval criterion being satisfied, trigger the creation of the cloud-based resource; and as a second result of the approval criterion being satisfied, trigger creation of a second cloud-based resource on which the cloud-based resource depends.

(A5) In the example system of any of A1-A4, wherein the resource lifecycle event includes modification of the cloud-based resource.

(A6) In the example system of any of A1-A5, wherein the resource lifecycle event includes deletion of the cloud-based resource.

(A7) In the example system of any of A1-A6, wherein the memory stores an extension resource that is defined by the computer-executable instructions; and wherein the computer-executable instructions are executable by the processor system further to at least: cause information about the extension resource to survive deletion of the extension resource by storing the information in the memory.

(A8) In the example system of any of A1-A7, wherein the computer-executable instructions are executable by the processor system to at least: trigger the cloud-based resource to perform the resource lifecycle event with regard to the cloud-based resource by informing the cloud-based resource of the approval criterion being satisfied.

(A9) In the example system of any of A1-A8, wherein the computer-executable instructions are executable by the processor system to obtain the explicit approval from the designated approver by performing at least the following operations: configure an approval request to expire at an expiration time instance that temporally follows a provision time instance by a specified amount of time, wherein the expiration time instance is a time instance at which the approval request expires, wherein expiration of the approval request causes the approval request to be incapable of being approved by the designated approver, wherein the provision time instance is a time instance at which the approval request is provided to the designated approver, wherein the approval request solicits approval of the approval request, wherein approval of the approval request grants approval to perform the resource lifecycle event with regard to the cloud-based resource; provide the approval request to the designated approver at the provision time instance; and receive the explicit approval from the designated approver prior to the expiration time instance.

(B1) An example method is implemented by a computing system (Figure 1, 102A-102M, 106A-106N; Figure 2, 206; Figure 4, 400; Figure 7, 700). The method comprises receiving (Figure 2, 226; Figure 3, 302) a request (Figure 4, 452) to perform a resource lifecycle event with regard to a cloud-based resource (Figure 1, 110; Figure 2, 210). The method further comprises identifying (Figure 2, 228; Figure 3, 304) a designated approver (Figure 1, 108; Figure 2, 208) that has authority to grant approval to perform the resource lifecycle event with regard to the cloud-based resource as a result of the designated approver having an approver role (Figure 1, 116), which is authorized to grant the approval to perform the resource lifecycle event with regard to the cloud-based resource. The method further comprises obtaining (Figure 2, 234; Figure 3, 306) an explicit approval (Figure 4, 476) from the designated approver. The explicit approval grants approval to perform the resource lifecycle event with regard to the cloud-based resource. The method further comprises, as a result of an approval criterion (Figure 4, 466) being satisfied, triggering (Figure 2, 236; Figure 3, 312) performance of the resource lifecycle event with regard to the cloud-based resource, the approval criterion comprising obtainment of the explicit approval.

(B2) In the example method of B1, wherein the resource lifecycle event includes at least one of creation of the cloud-based resource, modification of the cloud-based resource, or deletion of the cloud-based resource.

(B3) In the example method of any of B1-B2, wherein the method is implemented by an extension resource that executes on the computing system; and wherein the method further comprises: storing information about the extension resource in persistent storage that survives deletion of the extension resource.

(B4) In the example method of any of B1-B3, further comprising: identifying a second designated approver that has authority to grant approval to perform the resource lifecycle event with regard to the cloud-based resource as a result of the second designated approver having the approver role; and obtaining a second explicit approval from the second designated approver, the second explicit approval granting approval to perform the resource lifecycle event with regard to the cloud-based resource; wherein the approval criterion comprises the obtainment of the explicit approval and further comprises obtainment of the second explicit approval.

(B5) In the example method of any of B1-B4, wherein the approval criterion comprises obtainment of explicit approvals from a number of designated approvers that is greater than or equal to a threshold number; wherein each designated approver has the approver role; and wherein each explicit approval grants approval to perform the resource lifecycle event with regard to the cloud-based resource.

(B6) In the example method of any of B1-B5, wherein a policy identifies the designated approver and indicates that obtaining the explicit approval from the designated approver is a prerequisite for triggering the performance of the resource lifecycle event with regard to the cloud-based resource; and wherein satisfaction of the approval criterion comprises satisfaction of the prerequisite.

(B7) In the example method of any of B1-B6, further comprising: providing an approval request to the designated approver, the approval request soliciting approval to perform the resource lifecycle event with regard to the cloud-based resource; tracking an amount of time that passes from a time instance at which the approval request is provided to the designated approver; and as a result of the amount of time that passes being greater than or equal to a threshold amount of time, providing a notification to the designated approver, the notification indicating that the designated approver is to provide a response that approves or denies the approval request.

(B8) In the example method of any of B1-B7, further comprising: receiving criterion information, which describes the approval criterion, from the cloud-based resource; and as a result of receiving the criterion information from the cloud-based resource, determining that the approval criterion is satisfied.

(B9) In the example method of any of B1-B8, further comprising: receiving metadata, which describes an attribute of the resource lifecycle event, from the cloud-based resource; wherein triggering the performance of the resource lifecycle event with regard to the cloud-based resource comprises: triggering the cloud-based resource to perform the resource lifecycle event with regard to the cloud-based resource using the metadata by providing the metadata to the cloud-based resource.

(B10) In the example method of any of B1-B9, wherein triggering the performance of the resource lifecycle event with regard to the cloud-based resource comprises: blocking the performance of the resource lifecycle event with regard to the cloud-based resource until the approval criterion is satisfied.

(C1) An example computer program product (Figure 7, 718, 722) comprises a computer-readable storage medium having instructions recorded thereon for enabling a processor-based system (Figure 1, 102A-102M, 106A-106N; Figure 2, 206; Figure 4, 400; Figure 7, 700) to perform operations. The operations comprise receiving (Figure 2, 226; Figure 3, 302) a request (Figure 4, 452) to perform a resource lifecycle event with regard to a cloud-based resource (Figure 1, 110; Figure 2, 210). The operations further comprise identifying (Figure 2, 228; Figure 3, 304) a designated approver (Figure 1, 108; Figure 2, 208) that has authority to grant approval to perform the resource lifecycle event with regard to the cloud-based resource as a result of the designated approver having an approver role (Figure 1, 116), which is authorized to grant the approval to perform the resource lifecycle event with regard to the cloud-based resource. The operations further comprise obtaining (Figure 2, 234; Figure 3, 306) an explicit approval (Figure 4, 476) from the designated approver. The explicit approval grants approval to perform the resource lifecycle event with regard to the cloud-based resource. The operations further comprise, as a result of an approval criterion (Figure 4, 466) being satisfied, triggering (Figure 2, 236; Figure 3, 312) performance of the resource lifecycle event with regard to the cloud-based resource, the approval criterion comprising obtainment of the explicit approval.

### III. Example Computer System

FIG. 7 depicts an example computer 700 in which embodiments may be implemented. Any one or more of the client devices 102A-102M, any one or more of the servers 106A-106N, and/or designated approver 108 shown in FIG. 1; the requestor 202, any one or more of the server(s) 206, and/or the designated approver 208 shown in FIG. 2; and/or the computing system 400 shown in FIG. 4 may be implemented using computer 700, including one or more features of computer 700 and/or alternative features. Computer 700 may be a general-purpose computing device in the form of a conventional personal computer, a mobile computer, or a workstation, for example, or computer 700 may be a special purpose computing device. The description of computer 700 provided herein is provided for purposes of illustration, and is not intended to be limiting. Embodiments may be implemented in further types of computer systems, as would be known to persons skilled in the relevant art(s).

As shown in FIG. 7, computer 700 includes a processor system 702, a system memory 704, and a bus 706 that couples various system components including system memory 704 to processor system 702. Bus 706 represents one or more of any of several types of bus structures, including a memory bus or memory controller, a peripheral bus, an accelerated graphics port, and a processor or local bus using any of a variety of bus architectures. System memory 704 includes read only memory (ROM) 708 and random access memory (RAM) 710. A basic input/output system 712 (BIOS) is stored in ROM 708.

Computer 700 also has one or more of the following drives: a hard disk drive 714 for reading from and writing to a hard disk, a magnetic disk drive 716 for reading from or writing to a removable magnetic disk 718, and an optical disk drive 720 for reading from or writing to a removable optical disk 722 such as a CD ROM, DVD ROM, or other optical media. Hard disk drive 714, magnetic disk drive 716, and optical disk drive 720 are connected to bus 706 by a hard disk drive interface 724, a magnetic disk drive interface 726, and an optical drive interface 728, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 730, one or more application programs 732, other program modules 734, and program data 736. Application programs 732 or program modules 734 may include, for example, computer program logic for implementing any one or more of (e.g., at least a portion of) the cloud-based resource 110, the extension resource 112, the requestor 202, the designated approver 208, the cloud-based resource 210, the extension resource 212, the extension resource 414, the representation creation logic 442, the approver identification logic 444, the approval obtaining logic 446, the trigger logic 448, the request provisioning logic 682, the time tracking logic 684, the notification provisioning logic 686, activity diagram 200 (including any activity of activity diagram 200), flowchart 300 (including any step of flowchart 300), and/or flowchart 500 (including any step of flowchart 500), as described herein.

A user may enter commands and information into the computer 700 through input devices such as keyboard 738 and pointing device 740. Other input devices (not shown) may include a microphone, joystick, game pad, satellite dish, scanner, touch screen, camera, accelerometer, gyroscope, or the like. These and other input devices are often connected to the processor system 702 through a serial port interface 742 that is coupled to bus 706, but may be connected by other interfaces, such as a parallel port, game port, or a universal serial bus (USB).

A display device 744 (e.g., a monitor) is also connected to bus 706 via an interface, such as a video adapter 746. In addition to display device 744, computer 700 may include other peripheral output devices (not shown) such as speakers and printers.

Computer 700 is connected to a network 748 (e.g., the Internet) through a network interface or adapter 750, a modem 752, or other means for establishing communications over the network. Modem 752, which may be internal or external, is connected to bus 706 via serial port interface 742.

As used herein, the terms "computer program medium" and "computer-readable storage medium" are used to generally refer to media (e.g., non-transitory media) such as the hard disk associated with hard disk drive 714, removable magnetic disk 718, removable optical disk 722, as well as other media such as flash memory cards, digital video disks, random access memories (RAMs), read only memories (ROM), and the like. A computer-readable storage medium is not a signal, such as a carrier signal or a propagating signal. For instance, a computer-readable storage medium may not include a signal. Accordingly, a computer-readable storage medium does not constitute a signal per se. Such computer-readable storage media are distinguished from and non-overlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

As noted above, computer programs and modules (including application programs 732 and other program modules 734) may be stored on the hard disk, magnetic disk, optical disk, ROM, or RAM. Such computer programs may also be received via network interface 750 or serial port interface 742. Such computer programs, when executed or loaded by an application, enable computer 700 to implement features of embodiments discussed herein. Accordingly, such computer programs represent controllers of the computer 700.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

### IV. Conclusion

The foregoing detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

## Claims

1. A system (102A-102M, 106A-106N, 206, 400, 700) comprising:
a processor system (702); and
a memory (704, 708, 710) that stores computer-executable instructions that are executable by the processor system (702) to at least:
receive (226, 302) a request (452) to perform a resource lifecycle event with regard to a cloud-based resource (110, 210);
identify (228, 304) a designated approver (108, 208) that has authority to grant approval to perform the resource lifecycle event with regard to the cloud-based resource (110, 210) as a result of the designated approver (108, 208) having an approver role (116), which is authorized to grant the approval to perform the resource lifecycle event with regard to the cloud-based resource (110, 210);
obtain (234, 306) an explicit approval (476) from the designated approver (108, 208), the explicit approval (476) granting approval to perform the resource lifecycle event with regard to the cloud-based resource (110, 210); and
as a result of an approval criterion (466) being satisfied, trigger (236, 312) performance of the resource lifecycle event with regard to the cloud-based resource (110, 210), the approval criterion (466) comprising obtainment of the explicit approval (476).

2. The system according to claim 1, wherein the resource lifecycle event includes creation of the cloud-based resource, modification of the cloud-based resource, or deletion of the cloud-based resource.

3. The system according to any one of claims 1 to 2, wherein the computer-executable instructions are executable by the processor system to at least:
receive a request to create the cloud-based resource;
as a result of the request to create the cloud-based resource being received, create a non-functional placeholder that represents the cloud-based resource; and
trigger creation of the cloud-based resource by causing the non-functional placeholder to be filled with content that includes functionality of the cloud-based resource.

4. The system according to any one of claims 1 to 3, wherein the computer-executable instructions are executable by the processor system to at least:
as a first result of the approval criterion being satisfied, trigger the creation of the cloud-based resource; and
as a second result of the approval criterion being satisfied, trigger creation of a second cloud-based resource on which the cloud-based resource depends.

5. The system according to any one of claims 1 to 4, wherein the memory stores an extension resource that is defined by the computer-executable instructions; and
wherein the computer-executable instructions are executable by the processor system further to at least:
cause information about the extension resource to survive deletion of the extension resource by storing the information in the memory.

6. The system according to any one of claims 1 to 5, wherein the computer-executable instructions are executable by the processor system to at least:
trigger the cloud-based resource to perform the resource lifecycle event with regard to the cloud-based resource by informing the cloud-based resource of the approval criterion being satisfied.

7. The system according to any one of claims 1 to 6, wherein the computer-executable instructions are executable by the processor system to obtain the explicit approval from the designated approver by performing at least the following operations:
configure an approval request to expire at an expiration time instance that temporally follows a provision time instance by a specified amount of time,
wherein the expiration time instance is a time instance at which the approval request expires,
wherein expiration of the approval request causes the approval request to be incapable of being approved by the designated approver,
wherein the provision time instance is a time instance at which the approval request is provided to the designated approver,
wherein the approval request solicits approval of the approval request,
wherein approval of the approval request grants approval to perform the resource lifecycle event with regard to the cloud-based resource;
provide the approval request to the designated approver at the provision time instance; and
receive the explicit approval from the designated approver prior to the expiration time instance.

8. A method implemented by a computing system (102A-102M, 106A-106N, 206, 400, 700), the method comprising:
receiving (226, 302) a request (452) to perform a resource lifecycle event with regard to a cloud-based resource (110, 210);
identifying (228, 304) a designated approver (108, 208) that has authority to grant approval to perform the resource lifecycle event with regard to the cloud-based resource (110, 210) as a result of the designated approver (108, 208) having an approver role (116), which is authorized to grant the approval to perform the resource lifecycle event with regard to the cloud-based resource (110, 210);
obtaining (234, 306) an explicit approval (476) from the designated approver (108, 208), the explicit approval (476) granting approval to perform the resource lifecycle event with regard to the cloud-based resource (110, 210); and
as a result of an approval criterion (466) being satisfied, triggering (236, 312) performance of the resource lifecycle event with regard to the cloud-based resource (110, 210), the approval criterion (466) comprising obtainment of the explicit approval (476).

9. The method according to claim 8, wherein the resource lifecycle event includes at least one of creation of the cloud-based resource, modification of the cloud-based resource, or deletion of the cloud-based resource.

10. The method according to any one of claims 8 to 9, wherein the method is implemented by an extension resource that executes on the computing system; and wherein the method further comprises:
storing information about the extension resource in persistent storage that survives deletion of the extension resource.

11. The method according to any one of claims 8 to 10, further comprising:
identifying a second designated approver that has authority to grant approval to perform the resource lifecycle event with regard to the cloud-based resource as a result of the second designated approver having the approver role; and
obtaining a second explicit approval from the second designated approver, the second explicit approval granting approval to perform the resource lifecycle event with regard to the cloud-based resource;
wherein the approval criterion comprises the obtainment of the explicit approval and further comprises obtainment of the second explicit approval.

12. The method according to any one of claims 8 to 11, further comprising one or more of:
(i) wherein the approval criterion comprises obtainment of explicit approvals from a number of designated approvers that is greater than or equal to a threshold number;
wherein each designated approver has the approver role; and
wherein each explicit approval grants approval to perform the resource lifecycle event with regard to the cloud-based resource;
(ii) wherein a policy identifies the designated approver and indicates that obtaining the explicit approval from the designated approver is a prerequisite for triggering the performance of the resource lifecycle event with regard to the cloud-based resource; and
wherein satisfaction of the approval criterion comprises satisfaction of the prerequisite.

13. The method according to any one of claims 8 to 12, further comprising:
providing an approval request to the designated approver, the approval request soliciting approval to perform the resource lifecycle event with regard to the cloud-based resource;
tracking an amount of time that passes from a time instance at which the approval request is provided to the designated approver; and
as a result of the amount of time that passes being greater than or equal to a threshold amount of time, providing a notification to the designated approver, the notification indicating that the designated approver is to provide a response that approves or denies the approval request.

14. The method according to any one of claims 8 to 13, further comprising one or more of:
(i) receiving criterion information, which describes the approval criterion, from the cloud-based resource; and as a result of receiving the criterion information from the cloud-based resource, determining that the approval criterion is satisfied;
(ii) receiving metadata, which describes an attribute of the resource lifecycle event, from the cloud-based resource; wherein triggering the performance of the resource lifecycle event with regard to the cloud-based resource comprises:
triggering the cloud-based resource to perform the resource lifecycle event with regard to the cloud-based resource using the metadata by providing the metadata to the cloud-based resource.
(iii) wherein triggering the performance of the resource lifecycle event with regard to the cloud-based resource comprises:
blocking the performance of the resource lifecycle event with regard to the cloud-based resource until the approval criterion is satisfied.

15. A computer program product (718, 722) comprising a computer-readable storage medium having instructions recorded thereon for enabling a processor-based system (102A-102M, 106A-106N, 206, 400, 700) to perform operations, the operations comprising:
receiving (226, 302) a request (452) to perform a resource lifecycle event with regard to a cloud-based resource (110, 210);
identifying (228, 304) a designated approver (108, 208) that has authority to grant approval to perform the resource lifecycle event with regard to the cloud-based resource (110, 210) as a result of the designated approver (108, 208) having an approver role (116), which is authorized to grant the approval to perform the resource lifecycle event with regard to the cloud-based resource (110, 210);
obtaining (234, 306) an explicit approval (476) from the designated approver (108, 208), the explicit approval (476) granting approval to perform the resource lifecycle event with regard to the cloud-based resource (110, 210); and
as a result of an approval criterion (466) being satisfied, triggering (236, 312) performance of the resource lifecycle event with regard to the cloud-based resource (110, 210), the approval criterion (466) comprising obtainment of the explicit approval (476).
